# EUROPEAN PATENT APPLICATION

(11) **EP 3 632 703 A1**
(43) Date of publication of application: **08.04.2020**
(21) Application number: 18805911.7
(22) Date of filing: 24.04.2018
(51) Int. Cl.: B60C 9/20, B60C 9/22

(54) **PNEUMATIC TIRE**

(30) Priority: 24.05.2017 JP 2017102813
(71) Applicant: Bridgestone Corporation, Tokyo 104-8340 (JP)
(72) Inventor: HASEGAWA, Keiichi, Tokyo 104-8340 (JP); SONE, Naoyuki, Tokyo 104-8340 (JP)
(74) Representative: Oxley, Robin John George
(86) International application number: PCT/JP2018/016662
(87) International publication number: WO 2018/216419

(57) **Abstract**

A pneumatic tire includes a carcass, an intersecting belt layer, and a restraining member. The carcass spans from one bead portion to another bead portion. The intersecting belt layer is arranged at an outer circumferential side of the carcass and is configured including plural belt plies each configured by covering a row of plural mutually parallel belt cords with a resin, such that the belt cords of one of adjacent belt plies and the belt cords of the other of the adjacent belt plies intersect each other. The restraining member is arranged adjacent to end portions of the belt plies so as to restrain movement of the end portions.

## Description

### Technical Field

The present disclosure relates to a pneumatic tire including an intersecting belt layer configured by plural belt plies that includes belt cords angled with respect to a tire circumferential direction. The belt cords of one of the adjacent belt plies and the belt cords of the other of the adjacent belt plies are angled in opposite directions with respect to the tire circumferential direction.

### Background Art

The pneumatic tires disclosed in Japanese Patent Application Laid-Open (JP-A) Nos. H10-35220, 2007-69745, and S61-119494 are, for example, known as pneumatic tires for mounting to an automobile.

### SUMMARY

### Technical Problem

JP-A Nos. H10-35220 discloses a general intersecting belt layer, and discloses a configuration in which a belt reinforcing layer configured to include a thermoplastic resin is placed at an end portion of a first belt layer adjacent to a carcass layer.

Cords have been covered with rubber in conventional intersecting belt layers. However, as vehicles are being imparted with higher performance, intersecting belt layers including cords covered with resin have been proposed in order to raise high speed durability of pneumatic tires (see JP-A Nos. 2007-69745 and S61-119494).

However, as vehicles are being imparted with still higher performance in recent years, there is demand in the market for pneumatic tires with high speed durability that has been raised even further.

In consideration of the above circumstances, an object of the present disclosure is to raise the high speed durability in a pneumatic tire including an intersecting belt.

### Solution to Problem

A pneumatic tire according to a first aspect includes a carcass, an intersecting belt layer, and a restraining member. The carcass spans from one bead portion to another bead portion. The intersecting belt layer is arranged at an outer circumferential side of the carcass and includes plural belt plies each configured by covering a row of plural mutually parallel belt cords with a resin, such that the belt cords of one of adjacent belt plies of the plurality of belt plies and the belt cords of another of the adjacent belt plies intersect each other. The restraining member is arranged adjacent to an end portion of the belt plies so as to restrain movement of the end portion.

### Advantageous Effects

The present disclosure as explained above exhibits the excellent advantageous effect of enabling high speed durability to be raised in a pneumatic tire including an intersecting belt.

### BRIEF DESCRIPTION OF DRAWINGS

Fig. 1A is a cross-section illustrating a pneumatic tire according to a first exemplary embodiment of the present invention, as sectioned along a tire rotation axis.
Fig. 1B is an enlarged cross-section illustrating the vicinity of a restraining member of the pneumatic tire illustrated in Fig. 1A.
Fig. 2 is a cross-section illustrating a pneumatic tire according to a second exemplary embodiment of the present invention, as sectioned along a tire rotation axis.
Fig. 3 is a cross-section illustrating a pneumatic tire according to a third exemplary embodiment of the present invention, as sectioned along a tire rotation axis.
Fig. 4 is a cross-section illustrating a pneumatic tire according to a fourth exemplary embodiment of the present invention, as sectioned along a tire rotation axis.
Fig. 5 is a cross-section illustrating a pneumatic tire according to a fifth exemplary embodiment of the present invention, as sectioned along a tire rotation axis.
Fig. 6 is a cross-section illustrating a pneumatic tire according to a sixth exemplary embodiment of the present invention, as sectioned along a tire rotation axis.

### DESCRIPTION OF EMBODIMENTS

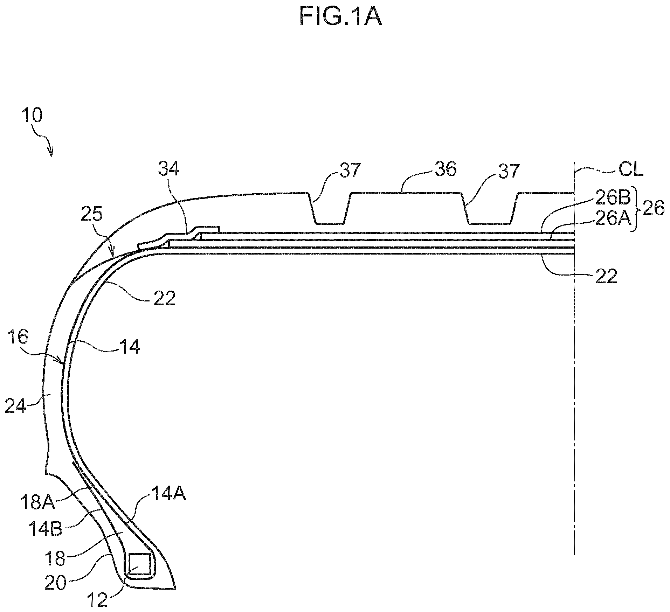

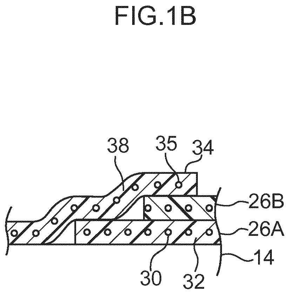

Explanation follows regarding a pneumatic tire 10 according to an exemplary embodiment of the present invention, with reference to Fig. 1.

As illustrated in Fig. 1, the pneumatic tire 10 of the present exemplary embodiment is, for example, what is referred to as a radial tire employed in passenger vehicles. The pneumatic tire 10 includes a pair of bead portions 20 with a bead core 12 embedded in each of the bead portions 20, and a carcass 16 formed of a single layer of a carcass ply 14 spanning between one of the bead portions 20 and the other of the bead portion 20.

The carcass ply 14 is formed by covering plural cords (not illustrated in the drawings) extending along radial directions of the pneumatic tire 10 with a coating rubber (not illustrated in the drawings). Namely, the pneumatic tire 10 of the present exemplary embodiment is what is referred to as a radial tire. The cord material of the carcass ply 14 is PET, for example, but may be another known conventional material.

Tire width direction end portions of the carcass ply 14 are folded back on themselves about the bead cores 12 toward a tire radial direction outer side. In the carcass ply 14, a portion thereof spanning from the one bead core 12 to the other bead core 12 is referred to as a main portion 14A, and portions thereof that are folded back after the bead cores 12 are referred to as folded-back portions 14B.

A bead filler 18 is disposed between the main portion 14A and the respective folded-back portions 14B of the carcass ply 14. The thickness of the bead filler 18 decreases on progression from the corresponding bead core 12 toward the tire radial direction outer side. Note that the bead portions 20 are configured by portions of the pneumatic tire 10 disposed between a tire radial direction inner side to a tire radial direction outer side end 18A of the bead filler 18.

An inner liner 22 formed of rubber is arranged at a tire inner side of the carcass 16. A side rubber layer 24 formed of a first rubber material is arranged at a tire width direction outer sides of the carcass 16.

Note that in the present exemplary embodiment a tire case 25 is configured by the bead cores 12, the carcass 16, the bead filler 18, the inner liner 22, and the side rubber layer 24. In other words, the tire case 25 is a tire frame member forming a frame of the pneumatic tire 10.

### Intersecting Belt Layer

An intersecting belt layer 26 is arranged at an outer side of a crown portion of the carcass 16, in other words, at a tire radial direction outer side of the carcass 16. The intersecting belt layer 26 of the present exemplary embodiment is configured including a first belt ply 26A arranged at a tire radial direction inner side, and a second belt ply 26B arranged at a tire radial direction outer side of the first belt ply 26A and formed with a narrower width than the first belt ply 26A.

The first belt ply 26A and the second belt ply 26B of the present exemplary embodiment are each formed by covering a row of plural mutually parallel belt cords 30 with a resin 32. Known cords, such as steel cords or organic fiber cords, may be employed as the belt cords 30. Examples of organic fiber cords include nylon cords and aromatic polyamide cords.

A resin material with a higher tensile elasticity than that of the rubber configuring the side rubber layer 24 and that of a second rubber material configuring a tread 36, described later, is employed as the resin 32 covering the belt cords 30. Examples of resins that may be employed as the resin 32 covering the belt cords 30A include thermoplastic resins with elastic properties, thermoplastic elastomers (TPE), and thermosetting resins etc. A thermoplastic elastomer is preferably employed in consideration of elasticity during running and formability during manufacture.

Examples of such thermoplastic elastomers include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), dynamically crosslinked-type thermoplastic elastomers (TPV), and the like.

Moreover, examples of such thermoplastic resins include polyurethane resins, polyolefin resins, vinyl chloride resins, polyamide resins, and the like. Moreover, a thermoplastic resin material having, for example, the characteristics of a deflection temperature under load (when loaded at 0.45 MPa) as defined by ISO 75-2 or ASTM D648 of 78°C or greater, a tensile yield strength as defined by JIS K7113 of 10 MPa or greater, a tensile elongation at break of 50% or greater also as defined in JIS K7113, and a Vicat softening temperature (method A) as defined by JIS K7206 of 130°C or greater may be employed.

A tensile elasticity (as defined by JIS K7113: 1995) of the resin 32 covering the belt cords 30 is preferably 50 MPa or greater. An upper limit of the tensile elasticity of the cord-covering resin 32 is preferably 1000 MPa or below. Note that the tensile elasticity of the cord-covering resin 32 is particularly preferably within a range of from 200 MPa to 500 MPa.

The tread 36 formed of the second rubber material is arranged at a tire radial direction outer side of the intersecting belt layer 26. A generally known conventional rubber may be employed for the second rubber material used in the tread 36. Drainage grooves 37 are formed in the tread 36. A generally known conventional pattern may be employed for the pattern of the tread 36.

### Restraining Member

In the intersecting belt layer 26 of the pneumatic tire 10 of the present exemplary embodiment, end portions of the first belt ply 26A and end portions of the second belt ply 26B at each side are covered by respective restraining members 34 arranged at a tire radial direction outer side thereof. The restraining members 34 are provided for the purpose of suppressing the end portions of the first belt ply 26A and the end portions of the second belt ply 26B from moving (for example, moving toward a tire radial direction outer side under centrifugal force).

As illustrated in Fig. 1B, the restraining members 34 of the present exemplary embodiment are each a belt shaped annular member configured by plural reinforcing cords 35 that extend around a tire circumferential direction and are covered with a resin 38. Although not illustrated in the drawings, the restraining members 34 may each be a belt shaped annular member configured by covering a woven fabric, a non-woven fabric, or the like with resin, may be a belt shaped annular member formed of resin alone, may be a belt shaped annular member configured by plural reinforcing cords 35 covered with rubber, or may be a belt shaped annular member configured by a woven fabric, a non-woven fabric, or the like covered with rubber.

As the type of the resin 38 employed in the restraining members 34, the same types of resin as for the cord-covering resin 32 may be employed, or another type of resin may be employed. The reinforcing cords 35 employed in the restraining members 34 may be known cords generally employed in pneumatic tires such as steel cords, organic fiber cords, or the like.

Note that the resin 38 of the restraining members 34 and the resin 32 of the first belt ply 26A and the second belt ply 26B are preferably thermo-welded together.

### Operation and Advantageous Effects

Explanation follows regarding operation and advantageous effects of the pneumatic tire 10 of the present exemplary embodiment.

In the pneumatic tire 10 of the present exemplary embodiment, the cords in the first belt ply 26A and in the second belt ply 26B of the intersecting belt layer 26 are covered by the resin 32. Thus, the bending rigidity of the ply is increased in comparison to cases in which the cords are covered with rubber, enabling movement of the ply end portions to be suppressed.

Furthermore, in the intersecting belt layer 26 of the pneumatic tire 10 of the present exemplary embodiment, the end portions of the first belt ply 26A and the end portions of the second belt ply 26B are covered by the respective restraining members 34 arranged at the tire radial direction outer side thereof. This enables movement of the end portions of the first belt ply 26A and the end portions of the second belt ply 26B to be suppressed during high speed running, thereby enabling heat generation in the vicinity of the end portions to be suppressed, and enabling high speed durability of the pneumatic tire 10 to be raised.

Moreover, in cases in which the resin 38 of the restraining members 34 is thermo-welded together with the resin 32 of the first belt ply 26A and the second belt ply 26B, these resins become an integral unit. This enables the advantageous effect of suppressing movement of the end portions of the first belt ply 26A and the end portions of the second belt ply 26B to be exhibited at more efficiently than when not thermo-welded together. The first belt ply 26A and the second belt ply 26B are also preferably thermo-welded together. Note that thermo-welding of the restraining members 34, the first belt ply 26A, and the second belt ply 26B may be performed during attachment at the outer circumference of the carcass 16.

Note that if there are locations within a tire where the materials of the tire configuration members have a large difference in rigidity (bending rigidity, tensile rigidity), then this makes stress concentration liable to occur, and gives rise to concerns regarding damage such as separation arising due to repeated deformation. Thus, the rigidity is preferably set so as to gradually change, with the rigidity of the second rubber material configuring the tread 36 less than the rigidity of the resin 38 employed in the restraining members 34, which in turn is less than the rigidity of the resin 32 of the first belt ply 26A and the second belt ply 26B.

### Other Exemplary Embodiments

Next, explanation follows regarding pneumatic tires 10 according to other exemplary embodiments of the present invention. Note that configuration the same as that described in the previous exemplary embodiment is allocated the same reference numerals, and explanation thereof is omitted.

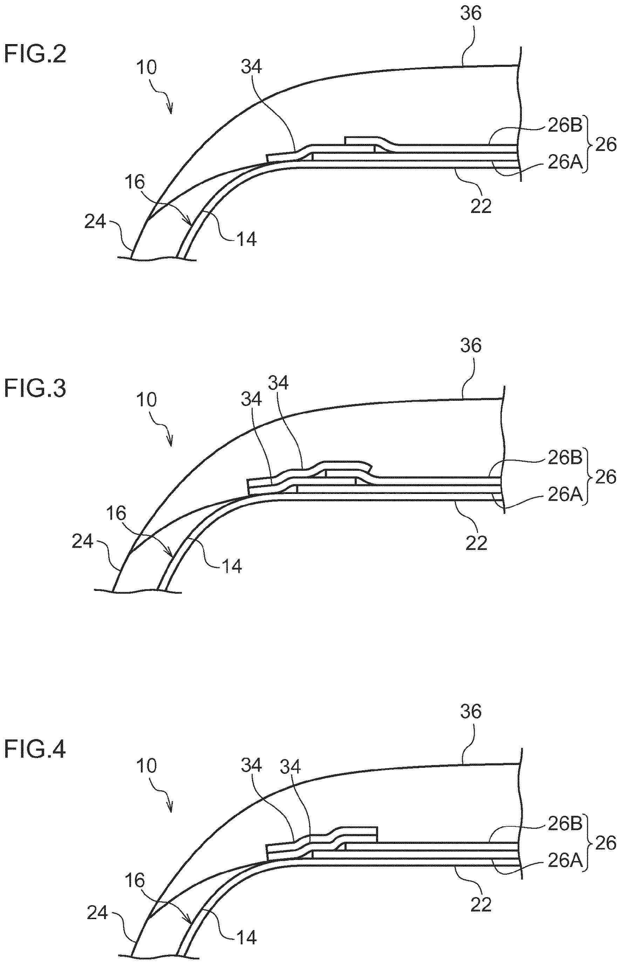

In the pneumatic tire 10 illustrated in Fig. 2, the restraining members 34 at each side are respectively sandwiched between the first belt ply 26A and the second belt ply 26B and thermo-welded (or bonded) thereto. Thus movement of the end portions of the first belt ply 26A and the end portions of the second belt ply 26B toward the tire radial direction outer side during high speed running can also be suppressed in the present exemplary embodiment, thereby enabling the high speed durability of the pneumatic tire 10 to be raised.

The pneumatic tire 10 illustrated in Fig. 3 adopts a configuration in which there is one layer of restraining member 34 at each side respectively covering end portions of the first belt ply 26A and end portions of the second belt ply 26B, and there is a second layer of restraining member 34 at each side arranged between the first belt ply 26A and the second belt ply 26B. This means that in the present exemplary embodiment the end portions of the first belt ply 26A and the end portions of the second belt ply 26B are restrained using two layers of the restraining members 34, thereby obtaining a higher restraint force than in cases in which a single layer of the restraining member 34 is employed alone.

In the pneumatic tire 10 illustrated in Fig. 4, there are two layers of restraining members 34 at each side respectively covering the end portions of the first belt ply 26A and the end portions of the second belt ply 26B, thereby obtaining a higher restraint force than in cases in which a single layer of the restraining member 34 is employed alone.

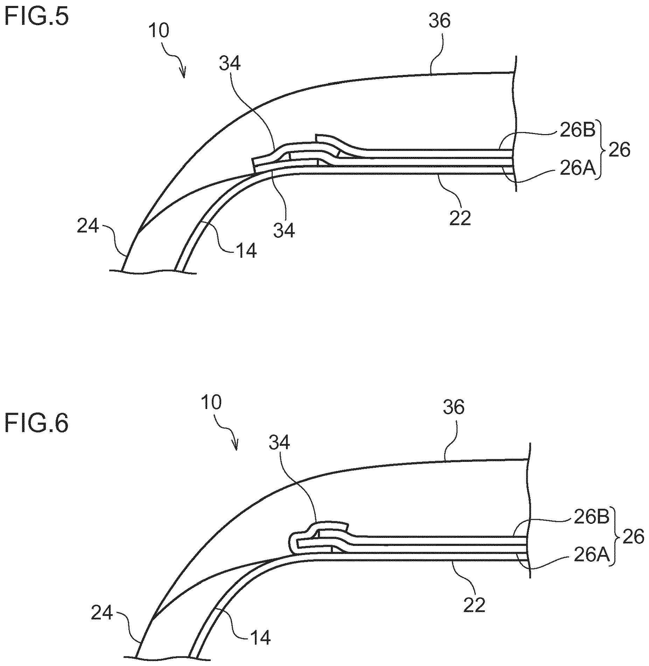

In the pneumatic tire 10 illustrated in Fig. 5, there is a single layer of restraining member 34 at each side arranged between the carcass ply 14 and each end portion of the first belt ply 26A, and there is a second layer of restraining member 34 at each side arranged between the first belt ply 26A and the second belt ply 26B, thereby obtaining a higher restraint force than in cases in which a single layer of the restraining member 34 is employed alone.

In the pneumatic tire 10 illustrated in Fig. 6, the end portions of the first belt ply 26A and the end portions of the second belt ply 26B are restrained in a state sandwiched from the radial direction inner side and outer side by one layer of folded-over restraining member 34, thereby obtaining a high restraint force even though there is only one layer of the restraining member 34.

Although examples of exemplary embodiments of the present invention have been explained above, the present disclosure is not limited thereto, and obviously various other modifications may be implemented within a range not departing from the scope of the present invention.

Note that configuration of the restraining members 34 and the positions to arrange the restraining members 34 are not limited to the examples illustrated in Fig. 1 to Fig. 6.

The end portions of the first belt ply 26A and the end portions of the second belt ply 26B are effectively restrained as long as the restraining members 34 are bonded to at least the end portions of the first belt ply 26A and the end portions of the second belt ply 26B, by thermo-welding, adhesive, or the like.

Moreover, in cases in which there are plural restraining members 34 then a configuration may be adopted in which one of the restraining members 34 is configured by resin alone, and in which another of the restraining members 34 is configured including resin and cord.

The disclosure of Japanese Patent Application No. 2017-102813, filed on May 24, 2017, is incorporated in its entirety by reference herein.

All cited documents, patent applications, and technical standards mentioned in the present specification are incorporated by reference in the present specification to the same extent as if each cited document, patent application, or technical standard was specifically and individually indicated to be incorporated by reference.

## Claims

1. A pneumatic tire, comprising:
a carcass spanning from one bead portion to another bead portion;
an intersecting belt layer arranged at an outer circumferential side of the carcass and including a plurality of belt plies each configured by covering a row of a plurality of mutually parallel belt cords with a resin, such that the belt cords of one of adjacent belt plies of the plurality of belt plies and the belt cords of another of the adjacent belt plies intersect each other; and
a restraining member arranged adjacent to end portions of the belt plies so as to restrain movement of the end portions.

2. The pneumatic tire of claim 1, wherein the restraining member comprises an annular member formed by a resin.

3. The pneumatic tire of claim 1 or claim 2, wherein the restraining member comprises a reinforced annular member including a reinforcing fiber covered by a resin or a rubber, or including a reinforcing cord covered by a resin or a rubber.

4. The pneumatic tire of any one of claim 1 to claim 3, wherein the resin for the belt cords and the resin for the restraining member are thermo-welded together.
